# NEUE EUROPÄISCHE PATENTSCHRIFT

(11) **EP 0 339 379 B2**
(45) Veröffentlichungstag und Bekanntmachung des Hinweises auf die Entscheidung über den Einspruch: **24.04.1996**
(45) Hinweis auf die Patenterteilung: 30.09.1992
(21) Anmeldenummer: 89106575.7
(22) Anmeldetag: 13.04.1989
(51) Int. Cl.: C04B 35/462

(54) **Sinterformkörper auf Basis von Aluminiumtitanat, Verfahren zu ihrer Herstellung sowie deren Verwendung**
Aluminium titanate base ceramics, method of producing the same and their utilisation
Articles réfractaires en titanate d'aluminium leur préparation et leur utilisation

(30) Priorität: 26.04.1988 DE 3814079
(43) Veröffentlichungstag der Anmeldung: 02.11.1989
(73) Patentinhaber: BAYER AG, D-51368 Leverkusen (DE)
(72) Erfinder: Gugel, Ernst, Dr., D-8633 Rödental (DE); Freudenberg, Bernhard, Dr., D-8630 Coburg (DE); Seyer, Johannes, Dipl.-Ing., D-8633 Rödental-Mittelberg (DE)

(56) Entgegenhaltungen:
- EP-A- 0 037 868
- EP-A- 0 133 021
- EP-A- 0 210 813
- DD-A- 29 794
- DE-A- 2 741 434
- DE-C- 2 750 290
- FR-A- 1 349 020
- FR-A- 2 408 557
- US-A- 2 776 896
- US-A- 4 118 240
- Salzmang/Scholze: Die physikalischen und chemischen Grundlagen der Keramik; Springer-Verlag 1968, S. 269 u. 279

## Beschreibung

Die vorliegende Erfindung betrifft Sinterformkörper auf der Basis der Hauptphasen Aluminiumeisentitanat und Mullit mit einer Zusammensetzung
50 - 62 Gew.-% Al₂O₃,
36 - 49,5 Gew.-% Titanoxid, berechnet als TiO₂,
0,5- 10 Gew.-% SiO₂,
wobei die Summe dieser drei Komponenten 100 % ergibt, sowie zusätzlich 0,2 bis 15 Gew.-% Eisenoxid, wobei die Summe dieser drei Komponenten 100 % ergibt, sowie zusätzlich 0,2 bis 15 Gew.-% Eisenoxid, berechnet als Fe₂O₃, und bis zu 1 Gew.-% Verunreinigungen, wobei die Summe der neben den Hauptphasen vorliegenden kristallinen Phasen Al₂O₃, TiO₂, SiO₂ kleiner als 6 Gew.-% ist, bezogen auf den Sinterformkörper, Verfahren zur Herstellung dieser Sinterformkörper sowie deren Verwendung.

In der Technik besteht ein Bedarf an thermoschockbeständigen Werkstoffen, die auch für Einsatztemperaturen von ≧ 1000°C geeignet sind und gleichzeitig durch ein Festigkeitsniveau von ≧ 40 MPa ingenieurmäßige Konstruktionen erlauben wie: in der Schmeizmetallurgie z.B. für Durchflußregler im Apparatebau z.B. Heißgasventilatoren, im Motorenbau z.B. thermische Isolationen des Abgaskanals (Portliner), in der chemischen Technik z.B. als Filter oder Katalysator träger.

Keramik auf der Basis von reinem Aluminiumtitanat, oder Tialit, zeigt zwar interessante Eigenschaften wie einen kleinen Wärmeausdehnungskoeffizienten (WAK) und einen kleinen E-Modul. Jedoch sind diese technologisch nur bedingt verwertbar, aufgrund der sehr geringen Festigkeit und der Zersetzungsneigung im Temperaturbereich von ca. 900 bis ca. 1300°C. In diesem Temperaturintervall zerfällt Tialit in die Ausgangsoxide Al₂O₃ und TiO₂, was einhergeht mit einem starken Anstieg des WAK.

Es sind zahlreiche Vorschläge für die Herstellung von Keramik auf der Basis von Aluminiumtitanat gemacht worden. So bezieht sich die US-A 2 776 896 auf eine zerfallsresistente und thermoschockbeständige Aluminiumtitanatkeramik, deren verbesserte Eigenschaften durch Zusätze von Eisen, Magnesium und Silicium erreicht werden.

Danach bewirkt die Zugabe von 1 - 2 mol-% Fe₂TiO₅ zu Al₂TiO₅ bereits eine weitgehende Zerfallsresistenz und es können bis zu 50 mol-% Fe₂TiO₅ hinzugefügt werden, ohne daß der geringe WAK stärker beeinflußt wird. Für eine 90 mol-% Al₂TiO₅/10 mol-% Fe₂TiO₅-Keramik wird nach dem Brand ein WAK (RT - 400°C) von -2,35 x 10⁻⁶ l/K ermittelt.

Zusätzlich zur Eisenzugabe kann Siliciumdioxid der Masse beigemengt werden. Falls Siliciumdioxid zugegeben wird, sollte dies aus praktischen Gründen in Form von Ton erfolgen. Der Siliciumdioxidanteil an der Masse sollte 10 Gew.-% nicht überschreiten. Bevorzugt erfolgt die Versatzberechnung in der Art, daß für 2 Mol SiO₂ ein zusätzliches Mol TiO₂ hinzugefügt wird (Spalte 7, Zeile 21). Die bedingt einen Überschuß an freiem TiO₂, woraus eine unzureichende Festigkeit resultiert. So weisen auch alle offenbarten Beispiele relativ hohe Gehalte an freien oxidischen Komponenten auf.

In der EP-B 133 021 wird eine Aluminiumtitanat-Mullitkeramik beschrieben, die aus 60 bis 75 Gew.-% Al₂O₃, 15 bis 35 Gew.-% TiO₂ und 1 bis 16,5 Gew.-% SiO₂ zusammengesetzt ist. Es wird zusätzlich vorgeschlagen 0,5 bis 5 Gew.-% Fe₂O₃ und/oder 0,5 bis 5 Gew.-% von Seltenerdoxiden zuzusetzen. Die beschriebenen Zusammensetzungen der gesinterten Keramik umfassen Mullitanteile von 20 bis 40 Gew.-%, Al₂TiO₅-Anteile von 50 bis 70 Gew.-% und Al₂O₃-Anteile von 10 bis 12 Gew.-%. Außerdem werden noch Oxide des Eisens, Lanthans und Neodyms angegeben. Ausreichende Festigkeitswerte von > 40 MPa werden nur bei Brenntemperaturen größer/gleich 1500°C und Zugabe von teuren Seltenerdoxiden erreicht.

Die EP-A 210 813 beschreibt eine Aluminiumtitanat-Mullitkeramik in deren Herstellung mindestens eine der beiden Komponenten Aluminiumtitanat oder Mullit vorsynthetisiert wurde, um dann bei Temperaturen zwischen 1500 und 1700°C gebrannt zu werden. Die summarische Zusammensetzung ist 53-74 Gew.-% Al₂O₃, 14-33 Gew.-% TiO₂, 6-20 Gew.-% SiO₂ und 1,2-5 Gew.-% Fe₂O₃. Wegen der notwendigen Vorsynthese ist dieses Verfahren relativ aufwendig. Darüber hinaus weisen die so hergestellten Sinterformkörper nur unzureichende Festigkeiten auf.

Aus der DE-PS 27 41 434 ist eine Aluminiumtitanatkeramik bekannt, welche neben 2 bis 13 Gew.-% SiO₂ 0,5 bis 10 Gew.-% an Seltenenerdoxiden enthält sowie 1,5 bis 20 Gew.-% der SnO₂. Diese Keramik weist nur unzureichende Festigkeitswerte auf.

Gemäß der DD-B 29 794 wird eine gute Temperaturwechselbeständigkeit durch einen sehr niedrigen, vorzugsweisen negativen linearen Wärmeausdehnungskoeffizienten hervorgerufen. Zur Herstellung eines hochfeuerfesten, oxidischen Werkstoffes mit guter Temperaturwechselbeständigkeit werden gemäß dieser Schrift Zusammensetzungen aus

MgO-Al₂O₃-TiO₂ bzw. aus MgO-Al₂O₃-TiO₂-SiO₂

vorgeschlagen, wobei der TiO₂-Anteil 15 bis 75 Gew.-%, der Al₂O₃-Anteil 70 bis 25 Gew.-% und die Anteile von SiO₂ und MgO bis zu 40 bzw. 20 % betragen sollen. Der erzielbare lineare thermische Längenausdehnungskoeffizient soll im Bereich zwischen 10 und 700°C < 4 x 10⁻⁶ 1/K sein, vorzugsweise soll er negativ sein oder nur wenig von null abweichen. Die in den Beispielen angegebenen Abmischungsverhältnisse von Al₂O₃ zu TiO₂ umfassen den weiten Bereich von 1:0,7 bis 1:1,7, wobei der letztgenannte Bereich für eine silikatfreie Zusammensetzung mit 8 Gew.-% MgO-Anteil gilt.

Entsprechende Werkstoffe sind aufgrund ihrer geringen Festigkeit kaum zu verwerten.

Für den sicheren Einsatz der Keramik in der Technik bedarf es einer Vielzahl von Eigenschaften, die der Werkstoff in reproduzierbarer Form aufweisen muß. Für viele Einsätze, z.B. in der Schmelzmetallurgie, ist die Thermoschockbeständigkeit ein wichtiges Kriterium. Für die Thermoschockbeständigkeit ist nicht nur ein niedriger WAK entscheidend, sondern auch ein kleiner E-Modul und eine hohe Festigkeit. Das Einschrumpfverhalten der Keramik ist eine ebenso entscheidende Eigenschaft, in dem Fall, daß ein Keramikrohr mit einem Metallmantel umgossen werden soll, wie z.B. die Abgaskanalauskleidung (Portliner) im Zylinderkopf. Um der erstarrenden und schwindenden Metallhülle nachzugeben ohne zu reißen, benötigt man einen Keramikwerkstoff mit einer hohen Bruchdehnung bei minimalen Schrumpfkräften, d.h. kleiner E-Modul und hohe Festigkeit. Der Einsat:z der Keramik, z.B. als Heißgasventilator, verlangt weiterhin eine ausgezeichnete Zerfallsresistenz oberhalb von 900°C.

Aufgabe dieser Erfindung ist die Bereitstellung von Werkstoffen, die diese Eigenschaften aufweisen.

Weiterhin soll der Werkstoff in einem einfachen, kostengünstigen Verfahren erhältlich sein, wie z.B. durch Reaktionssintern.

Das Reaktionssintern der Al-, Ti-, Si- Fe-haltigen etc. -Rohstoffe hat gegenüber der Verwendung von vorsynthetisierten Produkten, wie z.B. Al₂TiO₅-Klinker, den Vorteil, daß man auf Rohstoffe zurückgreifen kann, welche in großen Mengen mit gut reproduzierbaren Eigenschaften relativ preisgünstig auf dem Markt zur Verfügung stehen. Aus Kostengründen sollte dabei das Reaktionssintern bei möglichst niedrigen Temperaturen, z.B. unterhalb von 1500°C erfolgen. Wirtschaftliche Überlegungen legen ebenfalls nahe auf solche teuren Zusätze, wie Seltenerdoxide, zu verzichten.

Trotz der Vielzahl der Patentliteratur und anderer Veröffentlichungen über Werkstoffe auf Aluminiumtitanat-Basis ist es bisher nicht gelungen, auf dem Weg des kostengünstigen Reaktionssintes ein in dieser Eigenschaftskombination befriedigendes Material herzustellen.

Der nachfolgend beschriebene erfindungsgemäße Werkstoff, hergestellt durch sorgfältige Auswahl der Zusammensetzung und einer angepaßten Prozeßführung, insbesondere beim Sintern, erfüllt alle oben aufgezählten technischen und wirtschaftlichen Anforderungen.

Gegenstand der Erfindung sind Sinterformkörper auf der Basis der Hauptphasen Aluminiumeisentitanat und Mullit mit einer Zusammensetzung
50 - 62 Gew.-% Al₂O₃,
36 - 49,5 Gew.-% Titanoxid, berechnet als TiO₂,
0,5 -10 Gew.-% SiO₂,
wobei die Summe dieser drei Komponenten 100 % ergibt, sowie zusätzlich 0,2 bis 15 Gew.-% Eisenoxid, berechnet als Fe₂O₃ und bis zu 1 Gew.-% Verunreinigungen, die Summe der neben den Hauptphasen vorliegenden kristallinen Phasen Al₂O₃, TiO₂, SiO₂ kleiner als 6 Gew.-% ist, bezogen auf den Sinterformkörper, dadurch gekennzeichnet, daß die Raumtemperaturbiegefestigkeit im Bereich von 40 bis 150 MPa, der E-Modul zwischen 5 und 20 GPa, der WAK (RT - 1000 °C) des Sinterformkörpers im Bereich +/- 2 x 10⁶1/K liegt.

Der erfindungsgemäße Werkstoff besteht im gebrannten Zustand im wesentlichen aus zwei kristallinen Phasen: einem Al₂TiO₅-Fe₂TiO₅-Mischkristall und der Mullitphase, welche als 3Al₂O₃·2SiO₂ angenommen wird.

Besonders bevorzugt sind Sinterformkörper, bei denen die Summe der neben den Hauptphasen vorliegenden kristallinen Phasen Al₂O₃, TiO₂ und SiO₂ kleiner als 4 Gew.-% ist, bezogen auf den Sinterformkörper.

Die Anwesenheit von Eisen, z.B. in Form von feinteiligem Fe₂O₃, hat einen vorteilhaften sehr komplexen Einfluß auf die Gefügeentwicklung und auf die Zerfallsresistenz.

Besonders bevorzugte erfindungsgemäße Sinterformkörper weisen einen Gehalt an Eisenoxid, berechnet als Fe₂O₃, von 0,4 bis 5 Gew.-% auf.

Die Aluminiumtitanatbildung, beim Reaktionssintern ausgehend von reinem Al₂O₃ und TiO₂, läuft in einem Temperaturbereich von ∼ 1280 bis ∼ 1350°C nicht spontan ab, sondern bedarf eines Keimbildners, um Tialitkörner zu bilden. Eisen, z.B. in der Form von feinteiligem Fe₂O₃ mit einer mittleren Korngröße < 1 µm hat sich als Tialitkeimbildner bewährt.

Die erfindungsgemäßen Sinterformkörper zeichnen sich durch eine Kombination besonders guter physikalischer Eigenschaften aus. So ist an nach mehr als 100 Stunden bei 1000°C die Zerfallsresistenz gegeben.

Weiterhin vorteilhaft und charakteristisch ist die Tatsache, daß die erfindungsgemäßen Sinterformkörper bei relativ niedrigen Sintertemperaturen mit kurzen Haltezeiten gebrannt werden können. Diese Sinterformkörper sind bei Temperaturen zwischen 1250 und 1500°C, bevorzugt zwischen 1300 und 1450°C, mit einen Haltezeit zwischen 0,5 und 100 h, bevorzugt zwischen 1 und 50 h, gesintert.

Gegenstand dieser Erfindung ist auch ein Verfahren zur Herstellung der erfindungsgemäßen Sinterformkörper. Dieses ist dadurch gekennzeichnet, daß es das Mischen, die Formgebung und das Sintern geeigneter Materialien umfaßt und der Sinterformkörper bis Temperaturen zwischen 1250 und 1500°C, bevorzugt zwischen 1300 und 1450°C, mit einer Haltezeit zwischen 0,5 und 100 h, bevorzugt zwischen 1 und 50 h, gesintert wird.

Hierzu kann in bekannter Weise aus einer Schlickermasse ein Grünkörper hergestellt werden. Ebenso kann die Formgebung durch Formen und Pressen einer die erfindungsgemäße Zusammensetzung aufweisenden Pulvermischung geschehen, welche die üblichen temporären Hilfsmittel enthält. Die Verwendung eines sprühgetrockneten Granulats kann vorteilhaft sein. Die Sinterung erfolgt bevorzugt als Reaktionssinterprozeß gemäß den obengenannten Sinterbedingungen. Natürlich können auch vorreagierte Mischungen ohne Nachteil eingesetzt, werden.

Nach dem Sinterprozeß kann der Sinterformkörper unter Einsatz bekannter Verfahren bearbeitet werden.

Gegenstand der Erfindung ist auch die Verwendung der erfindungsgemäßen Sinterformkörper.

Besonders geeignet sind sie zur Herstellung von hohlen rohrartigen Metall-Keramik-Verbundkörpern. Ebenso sind sie geeignet zur Bewehrung oder als isolierende Unterlage im Brennraum, Motorkolben und Zylinderkopf.

Eine weitere Verwendung liegt in ihrem Einsatz, gegebenenfalls nach Dotierung mit katalytisch wirkenden Substanzen, als Katalysatorträger. Aufgrund ihrer guten thermischen und mechanischen Eigenschaften sind die erfindungsgemäßen Sinterstoffe ebenso als Werkstoff in der Schmelzmetallurgie einsetzbar.

Im folgenden wird die Erfindung beispielhaft erläutert, ohne daß hierin eine Einschränkung zu sehen ist.

### Beispiele

Die pulverförmigen Rohstoffe, mittlere Korngröße < 2 µm, werden gemäß den Zusammensetzungen in Tabelle I gemischt. Die Dispergierung des wäßrigen Schlickers erfolgt in einer Trommelmühle unter Zugabe der üblichen Verflüssiger. Mittels Schlickerguß wird ein offener Kasten gegossen, aus welchem die Prüfstäbe, Abmessungen 50 x 5 x 3,5 mm, nach dem Brand herausgesägt werden. Die jeweiligen Brennbedingungen sowie die resultierenden Eigenschaften sind der Tabelle I zu entnehmen. Die kristallinen Phasen nach dem Brand wurden mittels Röntgendiffraktometrie bestimmt.

**Tabelle I**

| Beispiele | | | | |
|---|---|---|---|---|
| | Bsp. 1 | Bsp. 2 | Bsp. 3 | Bsp. 4 |
| chemische Zusammensetzung [Gew.-%] | | | | |
| Al₂O₃ | 56.0 | 57.5 | 57.9 | 57.9 |
| TiO₂ | 39.1 | 37.2 | 36.1 | 36.1 |
| SiO₂ | 2.9 | 4.2 | 4.9 | 4.9 |
| Fe₂O₃ | 2.0 | 1.1 | 1.1 | 1.1 |
| Brennbedingungen | 1375° C | 1400° C | 1375° C | 1400° C |
| | 5 h | 15 h | 45 h | 15 h |

| kristalline Phasen nach dem Brand [Gew.-%] | | | | |
|---|---|---|---|---|
| Al₂₋ₓFeₓTiO₅ | 93 | 87 | 85 | 85 |
| Mullit | 7 | 13 | 15 | 15 |
| Al₂O₃ | < 1 | < 1 | < 1 | < 1 |
| TiO₂ | < 1 | < 1 | < 1 | < 1 |

| Eigenschaften | | | | |
|---|---|---|---|---|
| Sinterdichte [g/cm³] | 3.11 | 3.07 | 3.06 | 3.07 |
| Biegefestigkeit [MPa] | 52 | 41 | 44 | 48 |
| E-Modul [GPa] | 19 | 16 | 18 | 20 |
| WAK (RT-1000° C) [10⁻⁶ 1/K] | 1.8 | 1.8 | 1.8 | 1.9 |

## Patentansprüche

1. Sinterformkörper auf der Basis der Hauptphasen Aluminiumeisentitanat und Mullit mit einer Zusammensetzung
50 - 62 Gew.-% Al₂O₃,
36 - 49,5 Gew.-% Titanoxid, berechnet als TiO₂,
0,5- 10 Gew.-% SiO₂,
wobei die Summe dieser drei Komponenten 100 % ergibt, sowie zusätzlich 0,2 bis 15 Gew.-% Eisenoxid, berechnet als Fe₂O₃ und bis zu 1 Gew.-% Verunreinigungen, wobei die Summe der neben den Hauptphasen vorliegenden kristallinen Phasen Al₂O₃, TiO₂, SiO₂ kleiner als 6 Gew.-% ist, bezogen auf den Sinterformkörper, dadurch gekennzeichnet, daß die Raumtemperaturbiegefestigkeit im Bereich von 40 bis 150 MPa, der E-Modul zwischen 5 und 20 GPa, der WAK (RT - 1000 °C) des Sinterformkörpers im Bereich +/- 2 x 10⁻⁶1/K liegt.

2. Sinterformkörper gemäß Anspruch 1, dadurch gekennzeichnet, daß die Summe der neben den Hauptphasen vorliegenden kristallinen Phasen Al₂O₃, TiO₂, SiO₂ kleiner als 4 Gew.-% ist, bezogen auf den Sinterformkörper.

3. Sinterformkörper gemäß einem der Ansprüche 1 oder 2, dadurch gekennzeichnet, daß der Eisenoxidgehalt, berechnet als Fe₂O₃ , 0,4 bis 5 Gew.-% beträgt.

4. Verfahren zur Herstellung der Sinterformkörper gemäß einem oder mehreren der Ansprüche 1 bis 3, dadurch gekennzeichnet, daß es das Mischen, die Formgebung und das Sintern geeigneter Materialien umfaßt und der Sinterformkörper bei Temperaturen zwischen 1250 und 1500 °C, bevorzugt zwischen 1300 und 1450 °C, mit einer Haltezeit zwischen 0,5 und 100 h, bevorzugt zwischen 1 und 50 h, gesintert wird.

5. Verfahren gemäß Anspruch 4, dadurch gekennzeichnet, daß der Sinterformkörper reaktionsgesintert wird.

6. Verwendung der Sinterformkörper gemäß einem oder mehreren der Ansprüche 1 bis 5 zur Herstellung von hohlen rohrartigen Metall-Keramik-Verbundkörpern.

7. Verwendung der Sinterformkörper gemäß einem oder mehreren der Ansprüche 1 bis 5 zur Herstellung von Motorkolben und Zylinderkopf.

8. Verwendung der Sinterformkörper gemäß einem oder mehreren der Ansprüche 1 bis 5, gegebenenfalls nach Dotierung mit katalytisch wirkenden Substanzen, als Katalysatorträger.

9. Verwendung der Sinterformkörper gemäß einem oder mehreren der Ansprüche 1 bis 5 als Werkstoff in der Schmelzmetallurgie.

## Claims

1. Sintered moulding based on the principal phases aluminium iron titanate and mullite having the composition:
from 50 to 62 wt-% Al₂O₃,
from 36 to 49.5 wt-% titanium oxide, expressed as TiO₂,
from 0.5 to 10 wt-% SiO₂,
wherein the sum of the latter three components is 100%, and additionally from 0.2 to 15 wt-% iron oxide, expressed as Fe₂O₃, and up to 1 wt-% impurities, wherein the sum of the crystalline phases Al₂O₃, TiO₂, SiO₂ present in addition to the principal phases is less than 6 wt-%, calculated on the sintered moulding, characterised in that the flexural strength at room temperature is within the range 40 to 150 MPa, the elastic modulus is between 5 and 20 GPa, and the coefficient of thermal expansion (room temperature to 1000°C) of the sintered moulding is within the range ± 2 x 10⁻⁶ 1/K.

2. Sintered moulding according to Claim 1, characterised in that the sum of the crystalline phases Al₂O₃, TiO₂, SiO₂ present in addition to the principal phases is less than 4 wt-%, calculated on the sintered moulding.

3. Sintered moulding according to one of Claims 1 or 2, characterised in that the iron oxide content, expressed as Fe₂O₃, is from 0.4 to 5 wt-%.

4. Process for the preparation of the sintered mouldings according to one or more of Claims 1 to 3, characterised in that it comprises the mixing, forming and sintering of suitable materials, and the sintered moulding is sintered at temperatures of between 1250 and 1500°C, preferably between 1300 and 1450°C, with a holding time between 0.5 and 100 h, preferably between 1 and 50 h.

5. Process according to Claim 4, characterised in that the sintered moulding is reaction-sintered.

6. Use of the sintered mouldings according to one or more of Claims 1 to 5 in the manufacture of hollow tubular metal/ceramic composites.

7. Use of the sintered mouldings according to one or more of Claims 1 to 5 in the manufacture of engine pistons and cylinder heads.

8. Use of the sintered mouldings according to one or more of Claims 1 to 5 as catalyst supports, optionally after doping with catalytically active substances.

9. Use of the sintered mouldings according to one or more of Claims 1 to 5 as a material in pyrometallurgy.

## Revendications

1. Corps moulés frittés à base des phases principales titanate d'aluminium et de fer et mullite ayant une composition de
50 à 62 % en poids d'Al₂O₃,
36 à 49,5 % en poids d'oxyde de titane, exprimé en TiO₂,
0,5 à 10 % en poids de SiO₂,
la somme de ces trois composants représentant 100% et en outre 0,2 à 15% en poids d'oxyde de fer, exprimé en Fe₂O₃ et jusqu'à 1% en poids d'impuretés, la somme des phases cristallines Al₂O₃, TiO₂, SiO₂, existant à côté des phases principales, est inférieure à 6% du poids des corps frittés moulés, caractérisés en ce que la résistance à la flexion à température ambiante est située dans le domaine de 40 à 150 MPa, le module d'élasticité est situé entre 5 et 20 GPa, le CDT (TA-1000°C) du corps moulé fritté est situé dans le domaine de ± 2 x 10⁻⁶ l/K.

2. Corps frittés moulés selon la revendication 1, caractérisés en ce que la somme des phases cristallines Al₂O₃, TiO₂ et SiO₂, existant à côté des phases principales, est inférieure à 4% du poids des corps frittés moulés.

3. Corps frittés moulés selon l'une des revendications 1 et 2, caractérisés en ce que la teneur en oxyde de fer, exprimée en Fe₂O₃_{,} est de 0,4 à 5% en poids.

4. Procédé de préparation des corps frittés selon une ou plusieurs des revendications 1 à 3, caractérisé en ce qu'il comprend le mélange, le formage et le frittage de matériaux appropriés et en ce que le corps moulé fritté est fritté à des températures comprises entre 1250 et 1500°C, de préférence entre 1300 et 1450°C, en une durée comprise entre 0,5 et 100 h, de préférence entre 1 et 50 h.

5. Procédé selon la revendication 4, caractérisé en ce que le corps moulé fritté est obtenu par frittage réactif.

6. Utilisation des corps moulés frittés selon une ou plusieurs des revendications 1 à 5 pour la fabrication de corps composites métal-céramique creux tubulaires.

7. Utilisation des corps moulés frittés selon une ou plusieurs des revendications 1 à 5 pour la fabrication de pistons de moteurs et de têtes de cylindres.

8. Utilisation des corps moulés frittés selon une ou plusieurs des revendications 1 à 5, éventuellement après dopage par des substances possédant une activité catalytique, en tant que supports de catalyseurs.

9. Utilisation des corps moulés frittés selon une ou plusieurs des revendications 1 à 5 en tant que matériau en fonderie.
